# EUROPEAN PATENT APPLICATION

(11) **EP 4 570 073 A1**
(43) Date of publication of application: **18.06.2025**
(21) Application number: 23215474.0
(22) Date of filing: 11.12.2023
(51) Int. Cl.: A23C 11/02, A23C 13/14, A23J 1/20, A23J 3/10

(54) **PROCESS FOR MANUFACTURING A CULINARY CREAM AND A CREAMER WITHOUT ANY MICROFILTRATION**

(71) Applicant: Inleit Ingredients SLU, 15310 A Coruña (ES)
(72) Inventor: Durantez Melgar, Juan Manuel, 34002 Palencia (ES); Snappe, Jean-Jacques, 62149 Festubert (FR)
(74) Representative: Argyma

(57) **Abstract**

A (first) volume of a compound, of a group (15) comprising cream from milk, a vegetable fat in the liquid state and water, is mixed (4) with emulsifying micellar caseins (3), obtained from a (second) volume of skimmed milk (5), with caseins, which has been subjected to a chemical treatment (11) to solubilize the mineral elements of the caseins and to a membrane filtration (8, 9), to obtain a culinary cream or a creamer, the membrane filtration being without any microfiltration.

## Description

### TECHNICAL FIELD

The field of the invention is that of culinary creams and creamers. Culinary cream means an animal or dairy cream, a vegetable cream, obtained from vegetable fats, vegetable oil, a mixture of dairy fat and vegetable fat, in particular whipped cream. By creamer, we mean a mixture of fats, proteins and exogenous agents, in the form of powder or liquid such as an emulsion of oil and water mixed with an emulsifying protein additive.

Cream, to take this example, comprises one of the major components of whole milk, fat, and is obtained by skimming it in a cream separator-centrifuge, sometimes by decantation.

### SUMMARY

More particularly, dairy creams, and namely the sterilized creams, are distinguished from acid or matured creams obtained after lactic fermentation and which are viscous and thick and do not need emulsifying proteins for their stabilization. These acid creams are for specific uses.

It will be noted that if matured creams are fermented with, in general, 30% fat, yoghurts, on the other hand, are only fermented with 1.5 to 3.5% fat.

Dairy creams, and namely the sterilized creams, require emulsifying proteins for their stabilization.

These are unstable neutral pH products. They must therefore be mixed with emulsifying proteins.

There are different types of dairy cream. In addition to raw cream, we can cite pasteurized cream, UHT cream, liquid cream, heavy cream, fresh cream, whipped cream, whipped cream, cream with a protected designation of origin (PDO), sour cream.

Dairy creams can have multiple and varied uses:
- overrun, for example, to make whipped cream;
- make sauces or serve for cooking food;
- prepare cooked meals;
- etc.

All these creams must be stabilized and, for those which are overrun, or whipped, have an adequate level of whipping maintained over time, for the others, allow any culinary use.

Until today, caseinates have been used for this purpose, in particular sodium caseinates, the particularity of which is to have a high emulsifying power.

Caseinates are produced in two particularly chemical steps.

The first step is a sudden acidification of hot skimmed milk, for example with hydrochloric acid (HCL), resulting in precipitation of proteins, in particular caseins.

The second step, after separation and washing of the precipitate, is a neutralization, generally liquid, of the acid caseins, often with sodium hydroxide (NaOH). In the rarer case of dry neutralization, it is to obtain extruded caseins of lower quality.

As a reminder, the emulsifying power is based on amphoteric molecules with a hydrophilic end, placed at the interface of the emulsion with the aqueous phase, and a hydrophobic end, placed at the interface of the emulsion with the fat.

An imperfect emulsion is namely due to the fact that the layer covering the fat is not continuous, leaves uncovered areas, which causes creaming, that is to say a rise to the surface of fat because of its low density (0.9 kg / l).

Conversely, an almost perfect emulsion corresponds to a fat coverage of 100%, or almost, and also to an excessively reduced size of the fat globules, which, moreover, promotes long-term stability of about six months, all the more acquired as the covering layer is thin.

Due to the eminently chemical nature of the manufacturing steps of caseinates, they are criticized for not being natural elements and they are, in this respect, discredited by consumers.

Therefore, the problem, of replacing caseinates with other additives with high emulsifying power, additives not only to dairy creams, but to all culinary creams as well as creamers, had been raised.

Milk contains, roughly, 80% of caseins and 20% of other proteins, the caseins having the shape of micelles. To solve the above problem, the professionals of the culinary creams and creamers had suggested to subject the milk to molecular sieving, or membrane filtration, first by ultrafiltration, in order to concentrate the proteins, and, then, by microfiltration, in order to concentrate the micellar caseins and eliminate most of the other proteins and, namely, the serum proteins (immunoglobulins, serum albumins, ...).

After the membrane filtration, remains a concentrated proteic juice comprising essentially micellar caseins (about 95,5%) which is used for manufacturing rather good culinary creams and creamers.

However, the applicant was not too satisfied with the results and got the idea of
- getting rid of the microfiltration,
- keeping all the proteins of milk (micellar caseins and whey proteins),
- eventually adding further proteins into the milk,
- concentrating the proteins by ultrafiltration to get a concentrate of proteins (better named protein retentate).

Ultrafiltration is a membrane separation process distinguishing from the microfiltration just by the size of the particles that can pass through. The size for the ultrafiltration is between 1 and 100 nm. For the microfiltration, the size is between 1 and 20 µm.

Moreover, it was discovered that by modifying the composition of the retentate, i.e proceeding with its denaturation in such a way as to develop accurately the functionality or the behavior of the proteins for the desired applications, particularly for emulsification, the results were unexpectedly, or surprisingly, after ultrafiltration, better than with usual, or standard, retentates or concentrates, if not outstanding.

The simple approach by thinking that caseinates for emulsification could be replaced by micellar caseins has been outstripped by a protein ratio including soluble proteins and micellar caseins along with an ultrafiltration technology.

As well, submitting the milk composition to a modification, before, during or after a filtration exclusively limited to an ultrafiltration, unexpectedly gave outstanding results.

By modification, or denaturation, it should be considered:
- adding further soluble proteins,
- modifying the caseins/(other proteins) ratio,
- modifying the acidification,
- applying a heat treatment,
- adding chelating agents

in other words,
- modifying the mineral composition of the milk.

Thanks to this unexpectation, on the one hand, and since the traditional professionals, up to now, wanted to get rid of the proteins other than the micellar caseins, process just opposite to the applicant's idea, on the other hand, said milk protein isolates (MPI) related idea does involve a magnificent inventive step.

Applicant will now define more precisely, or legally, the invention of the instant application.

Thus, the invention relates to a process for manufacturing a culinary cream or a creamer according to one of claims 1-21.

More precisely, the invention of the present application relates first to a process for manufacturing an element of the group comprising a culinary cream and a creamer, in which one takes a first volume of a compound of group comprising at least cream from milk, a vegetable fat in the liquid state and water, the compound of the first volume is mixed with an emulsifying additive and said element is obtained, process characterized by the fact that one takes a second volume of milk which contains caseins, the second volume of milk is subjected to a chemical treatment to solubilize the mineral elements of the caseins and to a filtration without any microfiltration to obtain emulsifying milk proteins, then the compound of the first volume is mixed with the emulsifying milk proteins from the second volume of milk treated and filtered to obtain said element.

The process of the invention, which preferably uses cow's milk, therefore comprises only natural steps. As for the concentrate of proteins obtained by filtration without microfiltration, it has the same emulsifying properties as caseinates.

The chemical treatment of the second volume of milk consists in extracting the calcium from the casein micelles by acidification of the milk, with natural acids, for example by carbon dioxide (CO2) and possibly by the phosphoric acids and also other organic acids, or by calcium chelating agents. As a result, the milk salts originally found in the micelles are solubilized. The milk demineralizes, the salts leave the proteins and a new protein concentrate is obtained from which a large part of the calcium has left in the filtration permeate.

The quality of the culinary cream obtained by the process of the invention, thanks to the functionalization of caseins, is much better than with unmodified proteins.

Preferably, by the chemical treatment, it is possible to reduce the caseins of the second volume of milk into micelles of less than 200 nm in diameter and to alter their molecular structure and make it more flexible in order to present a greater covering power.

Chemical treatment, but only called chemical, has little to do with the chemical treatment used to manufacture caseinates, as presented above.

The chemical treatment step of the present application may consist in only adding small amounts of acid since the structure of the proteins is greatly preserved in order to precisely be able to filter them.

After that, one can even carry out a slight neutralization, without altering the natural character of the culinary cream thus obtained.

Another advantage of the invention of the present application lies here in the ability, due to the conservation of the casein structure, to be able to produce again milk from the cream obtained, which is impossible with caseinates, the structure of the proteins being then changed in an irreversible way.

In the particular implementation of the process of the invention for making a culinary dairy cream, one takes a first volume of milk that has been skimmed and raw cream is obtained, the raw cream is mixed with an emulsifying additive and culinary dairy cream is obtained, process characterized by the fact that one takes a second volume of milk which contains caseins, the second volume of milk is subjected to a chemical treatment to solubilize the mineral elements of the caseins and to a filtration without any microfiltration to obtain emulsifying milk proteins, then the cream of the first volume of milk is mixed with the emulsifying milk proteins from the second volume of milk treated and filtered to obtain the culinary dairy cream.

In another particular implementation of the process of the invention for making a culinary vegetable cream, one takes a first volume of vegetable fat in the liquid state and water, it is mixed with an emulsifying additive and an emulsion and therefore the culinary vegetable cream is obtained, process characterized by the fact that one takes a second volume of milk which has been skimmed and contains caseins, the second volume of milk is subjected to a chemical treatment to solubilize the mineral elements of the caseins and to a filtration without any microfiltration to obtain emulsifying milk proteins, then the first volume of vegetable fat in the liquid state and water is mixed with the emulsifying milk proteins from the second volume of treated and filtered milk to obtain the culinary vegetable cream.

Even more particularly, to manufacture a culinary cream according to the process of the invention, one takes a first said volume of vegetable fat in the liquid state and water, one takes a third volume of milk which has been skimmed and cream is obtained, the said first volume of vegetable fat and water and the cream are mixed with an emulsifying additive and culinary cream is obtained, process characterized by the fact that one takes said second volume of milk which contains caseins, the said second volume of milk is subjected to a chemical treatment to solubilize the mineral elements of the caseins and to a filtration without any microfiltration to obtain emulsifying milk proteins, then the said first volume of vegetable fat in the liquid state and water and the cream obtained from said third volume of milk are mixed with the emulsifying milk proteins from the said second volume of treated and filtered milk to obtain the culinary cream.

Finally, to manufacture a creamer, according to the implementation of the general process of the invention, one takes a said first volume of liquid vegetable fat and water, it is mixed with an emulsifying protein additive and the creamer is obtained, process characterized by the fact that one emulsifies the first volume of liquid vegetable fat and water to get an emulsion, one takes a said second volume of milk which contains caseins, the said second volume of milk is subjected to a chemical treatment to solubilize the mineral elements of the caseins and to a filtration without any microfiltration to obtain emulsifying milk proteins, then the said first volume of the liquid vegetable fat and water emulsion is mixed with the emulsifying milk proteins from the said second volume of milk treated and filtered to obtain the creamer.

It should be noted that a creamer could be a liquid, a powder and also frozen.

Emulsifying the first volume of liquid vegetable fat and water enables to get fine droplets of fat. This is obtained by a strong mixing step, by means, for instance, of a high shearing turbine.

In addition to the emulsifying milk proteins, use could be made of other emulsifiers or even stabilizers.

It should be noted that the chemical treatment can be carried out using acid and/or chelating agents, or any other food chemical means such as phosphate salts, citrate salts or Glucono Delta Lactone.

Similarly, the volume of transformed milk can be subjected to a chemical treatment before, during or after the filtration.

Skimmed milk can, according to the invention, be pasteurized.

The volume of milk treated and filtered, to be mixed with a compound of said group can be skimmed totally or partially. In that last case, part of the fat originally within the milk remains in the composition to be filtered.

If the milk to be treated and filtered and mixed with a compound of said group is not skimmed, more fat could be added thereto prior to processing it any further with namely the ultrafiltration. Then, the retentate or concentrate, after vacuum evaporation of the retentate, or the dairy protein powder contains a non-negligible amount of fat for the final fat standardization of the whipped cream or the creamer.

Fat already present in the milk proteins would just have to be completed while finally making the whipped cream or the creamer.

Actually, the various steps of the manufacturing process did already whip a bit the cream.

Moreover, it could be completed either with vegetable fat or a mix of vegetal fat and animal fat.

Preferably, the milk to be subjected to the filtration can be subjected to a heat treatment from 72 °C up to 142 °C at various steps of the process and its protein ratio can also be modified at various steps of the process.

Said group, out of which said first volume of one of its compounds is taken, in another implementation of the process, can also include synthetic emulsifying agents, gums, structuring elements and other additives.

### BRIEF DESCRIPTION OF THE DRAWINGS

The invention will be better understood using the following description, with reference to the attached drawings, in which:
[Fig. 1] Figure 1 is a block diagram of a first implementation of the process for manufacturing the culinary cream of the invention;
[Fig. 2] Figure 2 is a block diagram of a second implementation of the process for manufacturing the culinary cream of the invention;
[Fig. 3] Figure 3 is a diagram illustrating the heat treatment of the skimmed milk subjected to filtration on denaturation of the alphalactalbumine of the milk;
[Fig. 4] Figure 4 is a diagram illustrating the heat treatment of the skimmed milk subjected to filtration on denaturation of the betalactoglobuline of the milk;

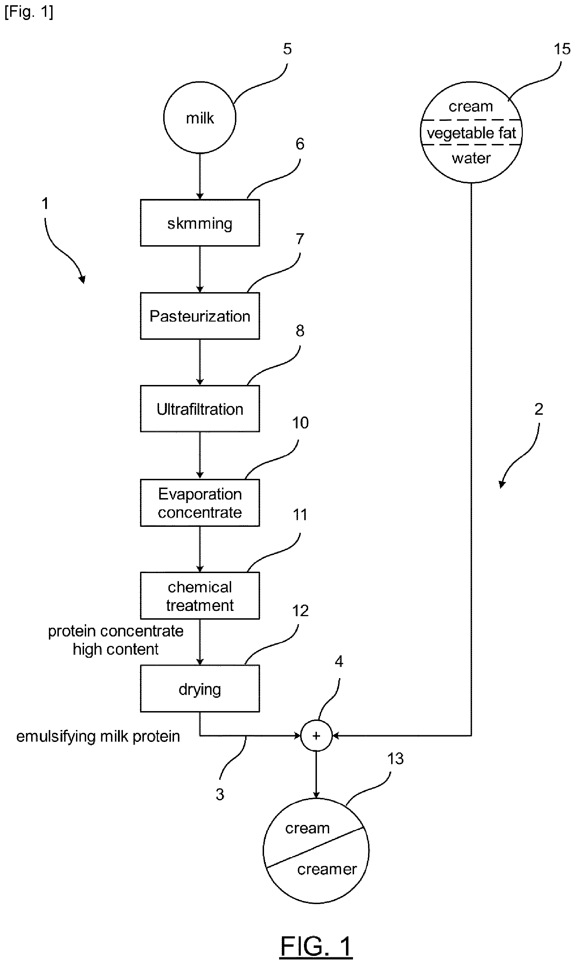

With reference to Figure 1, representing the block diagram of the steps of a particular implementation of the process of the invention, this diagram comprises two branches, one 1, that of the milk to be treated and filtered, and the other one 2, branch 1 being more detailed than branch 2.

Branch 2 starts from one of the compounds of group 15 comprising here cream from milk, vegetable fat and water, and a mixture of them.

Actually, the group 15 could comprise other compounds such as synthetic emulsifying agents, gums, structuring elements and even other additives.

Branch 1, starting from milk 5, comprises the characteristic steps of the process of the invention which apply regardless of the starting compound of branch 2.

Branch 1 of the milk makes it possible, at the end, to obtain emulsifying milk proteins 3 which are mixed (4), as an emulsifying additive, with a first volume of the starting compound of branch 2 to obtain the culinary cream or the creamer.

The mixture can be heat treated, particularly by an UHT (ultra high temperature) treatment.

Milk branch 1 of the culinary cream or creamer manufacturing process

We therefore start with whole milk, for example cow's milk, from tank 5.

The milk from tank 5, in this implementation, is skimmed 6. Incidentally, the raw cream produced by skimming can be one of said starting compounds from branch 2 when one wants to make dairy cream.

The skimmed milk is then pasteurized 7, then subjected to an ultrafiltration 8 which produces a milk protein retentate.

The two skimming and pasteurization steps could be inverted and even merged.

The milk protein retentate is then subjected to evaporation or concentration under vacuum 10, to get a concentrate subjected to a chemical treatment 11 to particularly extract the calcium from the casein micelles but also improve the functionality of the other proteins with casein micelles.

This chemical treatment could be carried out before filtration.

It will be noted that this chemical treatment could be undertaken before or after the filtration step, or even during this filtration step and even at the start. This chemical treatment is intended to produce a concentrate with a high content of emulsifying milk proteins which, after drying 12, will be mixed, in powder form, with the starting compound of branch 2 of the process, to finally obtain the culinary cream or the creamer with high emulsifying power and without caseinates that was wanted to be manufactured 13.

The emulsifying proteins could be used as a liquid, without any need of drying.

It should be noted that the drying step is of interest in case of time lapsed between the treatment and filtration of the milk and the use of the powder, because of warehousing or transport. Then, for the use of it, the powder is rehydrated.

It is important to note that the chemical treatment can be carried out using acid, chelating agents or by both at the same time, or salts, agents such as Glucono Delta Lactose.

After the chemical treatment, the transformed milk can advantageously be subjected to a slight neutralization.

It has already been mentioned herein above that the milk of branch 1 could not be skimmed, this enabling to add more fat.

Moreover, if skimmed, this milk could be partially or totally skimmed, depending on how the question of fat has to be taken care of.

The milk of branch 1 could also be modified to modify its mineral composition, as explained in the preamble portion of the instant specification.

For instance, the protein ratio of the milk could be modified and, this, at a step before pasteurization 7, a step before vacuum evaporation 10 and steps before or after the chemical treatment 11.

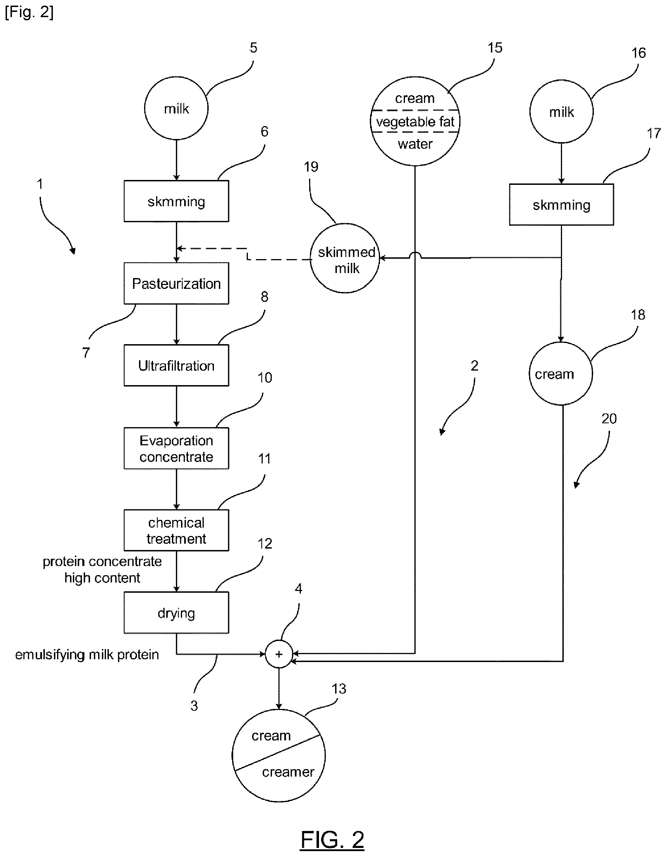

With reference to Figure 2, representing the block diagram of the steps of a slightly different implementation of the process of the invention, though similar to that of Figure 1, since it comprises same branches 1 and 2, it further comprises a third branch 20 starting from a third volume of milk in a tank 16.

Milk of tank 16, or milk 16, is skimmed 17 to obtain cream 18, that is directly mixed 4 with the emulsifying milk proteins 3 together with the first volume of the starting compound of branch 2, at just a single mixing step of the process.

The benefit of this last implementation is to avoid to mix, as a first step, the compounds of tank 15 of branch 2.

Otherwise, two mixing steps would be needed, this being a drawback for the manufacturing phases of the cream or creamer 13.

Of course, the skimmed milk 19, obtained by the skimming step 7 of branch 20, could be added to the skimmed milk obtained by the skimmed milk obtained by the skimming step 6 of branch 1.

Similarly to the other modifying steps of branch 1 of Figure 1 and 2, the heat treatment could be carried out at the pasteurization step 7, at a step after the ultrafiltration 8 and at steps before or after the chemical treatment 11, particularly within the range [72°C - 142°C] during a couple of seconds.

As an example, the results of a heat treatment of the skimmed milk will be described.

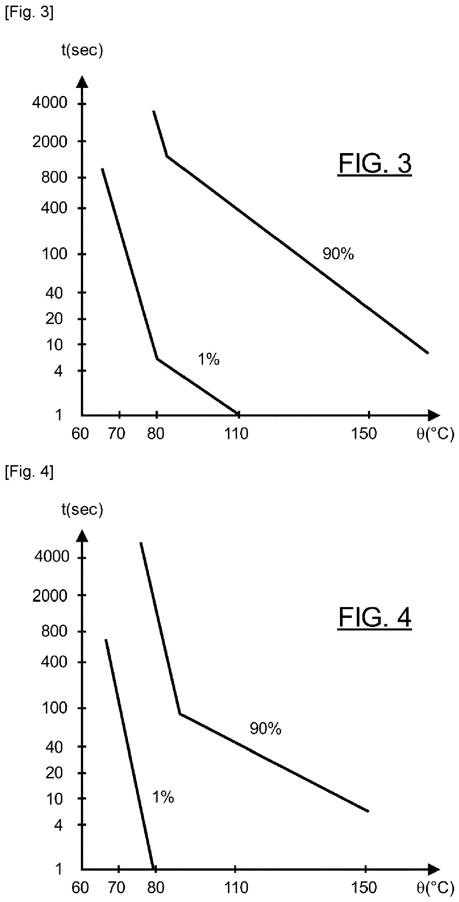

Referring to the diagrams of Fig. 2 and Fig. 3, illustrating a heat treatment of a skimmed milk, these diagrams have been drawn up by analysing the proteins of the milk one by one, as examples here, the proteins alphalactalbumine and betalactoglobuline. This has been achieved, for instance, by chromatography and electrophoresis.

These diagrams show the graphs of the rate of denaturation of the proteins in terms of the temperature and the duration of the heat treatment.

The two graphs are defined by an horizontal abscissa axis of the temperature θ, in Celsius degrees, and a vertical ordinate axis of the time duration t, in seconds.

Denaturation is the modification of the initial molecular structure of the proteins.

The object of the denaturation is to modify the functions, the power of the proteins for substituting the caseinates.

It should be noted that the analysis could also be carried out similarly at steps of the manufacturing process other than the skimming step.

On each graph, two curves have been plotted representing two rates of denaturation, 1% and 90%, respectively. It is interesting to note that when the temperature increases, the denaturation rate also increases. The time duration compensates the temperature: if the temperature decreases and the time duration increases, the denaturation rate remains constant.

When starting, in the second branch 2, with cream, it is preferable to use the emulsifying milk proteins as a powder, as illustrated in Figure 1; it is however possible to use them also in a liquid state to mix them with the cream.

To obtain a culinary vegetable cream, one starts, in the second branch 2, with a volume of vegetable fat in the liquid state and water before mixing it with the emulsifying additive 3.

One can start from a solid block of vegetable fat that is heated to around 50-60°C to transform it into a liquid. It can then be palm fat, palm kernel, coconut. Actually, it could be any oil.

One can also start with vegetable oil, for example from rapeseed, sunflower, etc.

When starting, in the second branch 2, with liquid vegetable fat, for example vegetable oil and cream, the cream then comes from a volume of milk called third volume of milk, the volume of milk with which it is started in the first branch 1 remaining the said "second volume".

After having obtained the culinary cream or the creamer, they can be pasteurized or sterilized.

It should be noted that the chemical treatment of milk can be carried out by Glucono Delta Lactose which is transformed into gluconic acid in an aqueous medium. The salts found in the casein micelles are thus solubilized.

The chemical treatment of milk can also be carried out by salts of phosphates, citrates or their combination.

By the chemical treatment of the milk, the size and volumic mass of the casein micelles are reduced. More particularly, they are reduced from micelles of 200 nm in diameter and the molecular structure of these caseins is altered to increase their covering power. It is even possible to reduce the micelles to the state of monomers and reduce their volumic mass to a few tens of 10⁷g/mole.

The cream obtained from the skimming machine generally comprises about 40% of fat. By standardization, it could be reduced to 30% of fat. However, those transforming these creams may also reduce them to 30, 25, 20, 15 and even 12% of fat by addition of skimmed milk or because the additions within the formulations lead to a reduction of the rate of fat (due to the dilution with the addition of the other compounds).

It has been pointed out above that the milk could be partially or totally skimmed.

It is even possible to add fat and, therefore, to enrich the milk in fat, prior to submitting it to the subsequent steps, including the ultrafiltration step.

Then, the retentate, or concentrate, or the produced milk protein powder, contains fat in a non-negligible quantity to be taken into account for the final fat standardization of the whipping cream or the creamer.

Fat already within the milk proteins will just be a complement when producing the whipping cream or the creamer.

Also to be noted is that it is absolutely not forbidden to add vegetable fat or a mixture of vegetable fat and animal fat.

An ultrafiltration is achieved with special modules providing a lower casein content like 88%, 85%, 80%, in any case equal to or over 80%, assuming pure cow's milk is filtered. If we add to this pure cow's milk soluble proteins, of course, the ratio of caseins is reduced.

A microfiltration is achieved with different modules and provides roughly over 90% of caseins, if pure cow's milk is filtered. Now, if the pure cow's milk is processed in such a way that the microfiltration be less efficient to concentrate micellar caseins, and so keeping more whey proteins, such a microfiltration should be considered as an ultrafiltration.

To this end, and for example, the one skilled in the art could modify the polarization layer which appears on filtration material surface altering the size of pores and polarity.

The polarization layer can be modified in modifying the pressure and the flow rate of the product to be filtered.

In other words, such a microfiltration looks like an ultrafiltration.

It should be emphasized that objecting to the reproduction of the instant manufacturing process, just because microfiltration is carried out, whereas such microfiltration is diverted from its usual implementation and is similar to ultrafiltration, would not be a good reason for not falling within the scope of protection of the instant case.

## Claims

1. A process for manufacturing an element of the group (13) comprising a culinary cream and a creamer, in which:
- one takes a first volume of a compound of group (15) comprising at least cream from milk, a vegetable fat in the liquid state and water,
- the compound of the first volume (15) is mixed with an emulsifying additive (3) and
- said element (13) is obtained,
process **characterized by** the fact that:
- one takes a second volume of milk (5) which contains caseins,
- the second volume of milk (5) is subjected to a chemical treatment (11) to solubilize the mineral elements of the caseins and to a filtration (8) without any microfiltration to obtain emulsifying milk proteins (3), then
- the compound (15) of the first volume is mixed (4) with the emulsifying milk proteins (3) from the second volume of milk (5) treated and filtered to obtain said element (13).

2. Process for the manufacturing of a culinary dairy cream according to claim 1, according to which:
- one takes a first volume of milk that has been skimmed and raw cream is obtained (15),
- the raw cream (15) is mixed (4) with an emulsifying additive (3) and
- culinary dairy cream (13) is obtained,
process **characterized by** the fact that:
- one takes a second volume of milk (5) which contains caseins,
- the second volume of milk (5) is subjected to a chemical treatment (11) to solubilize the mineral elements of the caseins and to a filtration (8) without any microfiltration to obtain emulsifying milk proteins (3), then
- the cream (15) of the first volume of milk is mixed (4) with the emulsifying milk proteins (3) from the second volume of milk (5) treated (11) and filtered (8) to obtain the culinary dairy cream (13).

3. Process for the manufacturing of a culinary vegetable cream according to claim 1, according to which:
- one takes a first volume of vegetable fat in the liquid state and water (15),
- it is mixed (4) with an emulsifying additive (3) and
- an emulsion and therefore the culinary vegetable cream (13) is obtained,
process **characterized by** the fact that:
- one takes a second volume of milk (5) which has been skimmed (6) and contains caseins,
- the second volume of milk (5) is subjected to a chemical treatment (11) to solubilize the mineral elements of the caseins and to a filtration (8) without any microfiltration to obtain emulsifying milk proteins (3), then
- the first volume of vegetable fat in the liquid state and water (15) is mixed (4) with the emulsifying milk proteins (3) from the second volume of treated (11) and filtered (8) milk (5) to obtain the culinary vegetable cream (13).

4. Process for manufacturing a culinary cream according to claim 1, according to which:
- one takes a said first volume of vegetable fat in the liquid state and water (15),
- one takes a third volume of milk (16) which has been skimmed (17) and cream (18) is obtained,
- the said first volume of vegetable fat and water (15) and the cream (18) are mixed (4) with an emulsifying additive (3) and
- culinary cream (13) is obtained,
process **characterized by** the fact that:
- one takes a said second volume of milk (5) which contains caseins,
- the said second volume of milk (5) is subjected to a chemical treatment (11) to solubilize the mineral elements of the caseins and to a filtration (8) without any microfiltration to obtain emulsifying milk proteins (3), then
- the said first volume of vegetable fat in the liquid state and water (15) and the cream (18) obtained from said third volume of milk (16) are mixed (4) with the emulsifying milk proteins (3) from the said second volume of treated (11) and filtered (8) milk (5) to obtain the culinary cream (13).

5. Process for manufacturing a creamer according to claim 1, according to which:
- one takes a said first volume of liquid vegetable fat and water (15),
- it is mixed (4) with an emulsifying protein additive (3) and
- the creamer (13) is obtained,
process **characterized by** the fact that:
- one emulsifies the first volume of liquid vegetable fat and water (15) to get an emulsion,
- one takes a said second volume of milk (5) which contains caseins,
- the said second volume of milk (5) is subjected to a chemical treatment (11) to solubilize the mineral elements of the caseins and to a filtration (8) without any microfiltration to obtain emulsifying milk proteins (3), then
- the said first volume (15) of the liquid vegetable fat and water emulsion is mixed (4) with the emulsifying milk proteins (3) from the said second volume of milk (5) treated (11) and filtered (8) to obtain the creamer (13).

6. Process for manufacturing a culinary cream or a creamer according to one of claims 1-5, wherein the filtration is exclusively an ultrafiltration (8).

7. Process for manufacturing a culinary cream or a creamer according to one of claims 1-6, wherein said second volume of milk (5) has been skimmed (6).

8. Process for manufacturing a culinary cream or a creamer according to claim 7, wherein said second volume of milk (5) has been totally skimmed (6).

9. Process for manufacturing a culinary cream or a creamer according to claim 7, wherein said second volume of milk (5) has been partially skimmed (6).

10. Process for manufacturing a culinary cream or a creamer according to one of claims 1-6 wherein said second volume of milk (5) has not been skimmed and fat has been added thereto.

11. Process according to one of claims 1-10, wherein the chemical treatment (11) is an acidification by an element of the group comprising natural acids, organic acids, calcium gelating agents, phosphate salts, citrate salts, Glucono Delta Lactone.

12. Process according to claim 11, wherein the caseins of the second volume of milk (5) are reduced into micelles of less than 200 nm in diameter.

13. Process according to one of claims 1-12, wherein the chemical treatment (11) is carried out before, during or after the filtration (8).

14. Process according to one of claims 1-11, wherein the milk (5) to be filtered (8) is subjected to a heat treatment from 72°C up to 142°C.

15. Process according to one of claims 1-14, wherein said group (15), out of which said first volume of one of its compounds is taken, comprises also elements of a subgroup comprising synthetic emulsifying agents, gums, structuring elements.

16. Process according to one of claims 1-15, wherein the milk (5), after having been subjected to a chemical treatment (11), is subjected to a slight neutralization.

17. Process according to one of claims 7-9, wherein the skimmed milk (6) is pasteurized (7).

18. Process for manufacturing a culinary cream or a creamer according to one of claims 1-17, wherein the protein ratio, of the milk (5) to be subjected to the filtration (8), is modified at one of the steps of the group including a step before a pasteurization, a step before a vacuum evaporation, steps before or after the chemical treatment (11).

19. Process for manufacturing a culinary cream or a creamer according to claim 14, wherein the milk (5) to be subjected to the filtration (8) is subjected to a heat treatment at one of the steps of the group including a pasteurization, a step after the filtration (8), steps before or after the chemical treatment (11).

20. Process according to one of claims 1-10, wherein the chemical treatment (11) is carried out by chelating agents.

21. Process according to one of claims 1-20, wherein the treated milk (5) is dried (12) before being mixed (4).

22. Culinary cream manufactured according to the process of one of claims 1-4, 6-21.

23. Creamer manufactured according to the process of one of claims 1, 5-21.

## Amended claims

### Amended claims in accordance with Rule 137(2) EPC.

1. A process for manufacturing an element of the group (13) comprising a culinary cream and a creamer, in which:
- one takes a first volume of a compound of group (15) comprising at least cream from milk, a vegetable fat in the liquid state and water,
- the compound of the first volume (15) is mixed with an emulsifying additive (3) and
- said element (13) is obtained,
process **characterized by** the fact that:
- one takes a second volume of milk (5) which contains caseins,
- the second volume of milk (5) is subjected to a chemical treatment (11) to solubilize the mineral elements of the caseins and to a filtration (8) without any microfiltration to obtain emulsifying milk proteins (3), then
- the compound (15) of the first volume is mixed (4) with the emulsifying milk proteins (3) from the second volume of milk (5) treated and filtered to obtain said element (13).

2. Process for the manufacturing of a culinary dairy cream according to claim 1, according to which:
- one takes a first volume of milk that has been skimmed and raw cream is obtained (15),
- the raw cream (15) is mixed (4) with an emulsifying additive (3) and
- culinary dairy cream (13) is obtained,
process **characterized by** the fact that:
- one takes a second volume of milk (5) which contains caseins,
- the second volume of milk (5) is subjected to a chemical treatment (11) to solubilize the mineral elements of the caseins and to a filtration (8) without any microfiltration to obtain emulsifying milk proteins (3), then
- the cream (15) of the first volume of milk is mixed (4) with the emulsifying milk proteins (3) from the second volume of milk (5) treated (11) and filtered (8) to obtain the culinary dairy cream (13).

3. Process for the manufacturing of a culinary vegetable cream according to claim 1, according to which:
- one takes a first volume of vegetable fat in the liquid state and water (15),
- it is mixed (4) with an emulsifying additive (3) and
- an emulsion and therefore the culinary vegetable cream (13) is obtained,
process **characterized by** the fact that:
- one takes a second volume of milk (5) which has been skimmed (6) and contains caseins,
- the second volume of milk (5) is subjected to a chemical treatment (11) to solubilize the mineral elements of the caseins and to a filtration (8) without any microfiltration to obtain emulsifying milk proteins (3), then
- the first volume of vegetable fat in the liquid state and water (15) is mixed (4) with the emulsifying milk proteins (3) from the second volume of treated (11) and filtered (8) milk (5) to obtain the culinary vegetable cream (13).

4. Process for manufacturing a culinary cream according to claim 1, according to which:
- one takes a said first volume of vegetable fat in the liquid state and water (15),
- one takes a third volume of milk (16) which has been skimmed (17) and cream (18) is obtained,
- the said first volume of vegetable fat and water (15) and the cream (18) are mixed (4) with an emulsifying additive (3) and
- culinary cream (13) is obtained,
process **characterized by** the fact that:
- one takes a said second volume of milk (5) which contains caseins,
- the said second volume of milk (5) is subjected to a chemical treatment (11) to solubilize the mineral elements of the caseins and to a filtration (8) without any microfiltration to obtain emulsifying milk proteins (3), then
- the said first volume of vegetable fat in the liquid state and water (15) and the cream (18) obtained from said third volume of milk (16) are mixed (4) with the emulsifying milk proteins (3) from the said second volume of treated (11) and filtered (8) milk (5) to obtain the culinary cream (13).

5. Process for manufacturing a creamer according to claim 1, according to which:
- one takes a said first volume of liquid vegetable fat and water (15),
- it is mixed (4) with an emulsifying protein additive (3) and
- the creamer (13) is obtained,
process **characterized by** the fact that:
- one emulsifies the first volume of liquid vegetable fat and water (15) to get an emulsion,
- one takes a said second volume of milk (5) which contains caseins,
- the said second volume of milk (5) is subjected to a chemical treatment (11) to solubilize the mineral elements of the caseins and to a filtration (8) without any microfiltration to obtain emulsifying milk proteins (3), then
- the said first volume (15) of the liquid vegetable fat and water emulsion is mixed (4) with the emulsifying milk proteins (3) from the said second volume of milk (5) treated (11) and filtered (8) to obtain the creamer (13).

6. Process for manufacturing a culinary cream or a creamer according to one of claims 1-5, wherein the filtration is exclusively an ultrafiltration (8).

7. Process for manufacturing a culinary cream or a creamer according to one of claims 1-6, wherein said second volume of milk (5) has been skimmed (6).

8. Process for manufacturing a culinary cream or a creamer according to claim 7, wherein said second volume of milk (5) has been totally skimmed (6).

9. Process for manufacturing a culinary cream or a creamer according to claim 7, wherein said second volume of milk (5) has been partially skimmed (6).

10. Process for manufacturing a culinary cream or a creamer according to one of claims 1-6 wherein said second volume of milk (5) has not been skimmed and fat has been added thereto.

11. Process according to one of claims 1-10, wherein the chemical treatment (11) is an acidification by an element of the group comprising natural acids, organic acids, calcium gelating agents, phosphate salts, citrate salts, Glucono Delta Lactone.

12. Process according to claim 11, wherein the caseins of the second volume of milk (5) are reduced into micelles of less than 200 nm in diameter.

13. Process according to one of claims 1-12, wherein the chemical treatment (11) is carried out before, during or after the filtration (8).

14. Process according to one of claims 1-11, wherein the milk (5) to be filtered (8) is subjected to a heat treatment from 72°C up to 142°C.

15. Process according to one of claims 1-14, wherein said group (15), out of which said first volume of one of its compounds is taken, comprises also elements of a subgroup comprising synthetic emulsifying agents, gums, structuring elements.

16. Process according to one of claims 1-15, wherein the milk (5), after having been subjected to a chemical treatment (11), is subjected to a slight neutralization.

17. Process according to one of claims 7-9, wherein the skimmed milk (6) is pasteurized (7).

18. Process for manufacturing a culinary cream or a creamer according to one of claims 1-17, wherein the protein ratio, of the milk (5) to be subjected to the filtration (8), is modified at one of the steps of the group including a step before a pasteurization, a step before a vacuum evaporation, steps before or after the chemical treatment (11).

19. Process for manufacturing a culinary cream or a creamer according to claim 14, wherein the milk (5) to be subjected to the filtration (8) is subjected to a heat treatment at one of the steps of the group including a pasteurization, a step after the filtration (8), steps before or after the chemical treatment (11).

20. Process according to one of claims 1-10, wherein the chemical treatment (11) is carried out by chelating agents.

21. Process according to one of claims 1-20, wherein the treated milk (5) is dried (12) before being mixed (4).
